(19) Europäisches Patentamt
European Patent Office
Office européen des brevets

(11) EP 3 702 404 B1

(12) EUROPEAN PATENT SPECIFICATION

(45) Date of publication and mention of the grant of the patent:
**17.07.2024 Bulletin 2024/29**

(21) Application number: **18870734.3**

(22) Date of filing: **16.10.2018**

(51) International Patent Classification (IPC):
***C08L 9/00*** *(2006.01)* ***B60C 1/00*** *(2006.01)*
***B60C 11/00*** *(2006.01)* ***C08K 3/04*** *(2006.01)*
***C08K 3/36*** *(2006.01)* ***C08L 9/06*** *(2006.01)*
***C08C 19/02*** *(2006.01)* ***C08C 19/22*** *(2006.01)*
***C08C 19/25*** *(2006.01)* ***C08C 19/44*** *(2006.01)*
***C08F 236/10*** *(2006.01)* ***C08L 15/00*** *(2006.01)*

(52) Cooperative Patent Classification (CPC):
(C-Sets available)
**C08F 236/10; B60C 1/00; B60C 1/0016; B60C 1/0025; C08C 19/02; C08C 19/22; C08C 19/25; C08C 19/44; C08K 3/04; C08K 3/36; C08L 15/00;** B60C 2001/0058 (Cont.)

(86) International application number:
**PCT/JP2018/038427**

(87) International publication number:
**WO 2019/082728 (02.05.2019 Gazette 2019/18)**

(54) **POLYMER COMPOSITION AND TIRE**

POLYMERZUSAMMENSETZUNG UND REIFEN

COMPOSITION DE POLYMÈRE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2017 JP 2017206045**

(43) Date of publication of application:
**02.09.2020 Bulletin 2020/36**

(73) Proprietor: **ENEOS Materials Corporation**
**Tokyo 105-0021 (JP)**

(72) Inventors:
- **SANO, Takuya**
  **Tokyo 105-8640 (JP)**
- **FUKUMOTO, Takato**
  **Tokyo 105-8640 (JP)**
- **ADACHI, Takumi**
  **Tokyo 105-8640 (JP)**
- **HONDA, Naoya**
  **Tokyo 105-8640 (JP)**
- **KOBAYASHI, Kunpei**
  **Tokyo 105-8640 (JP)**
- **UEDA, Jiro**
  **Tokyo 105-8640 (JP)**

(74) Representative: **TBK**
**Bavariaring 4-6**
**80336 München (DE)**

(56) References cited:
**WO-A1-2017/014282**
**JP-A- 2003 105 211**
**JP-A- 2006 016 526**
**JP-A- 2016 069 628**
**JP-A- 2016 069 628**
**JP-A- 2016 151 016**
**JP-A- S62 192 439**
**JP-A- S62 192 439**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 702 404 B1

(52) Cooperative Patent Classification (CPC): (Cont.)

C-Sets
**C08L 15/00, C08L 91/00, C08L 15/00, C08K 3/36, C08K 3/04, C08K 5/548, C08K 3/06, C08K 5/09, C08K 3/22, C08K 5/31, C08K 5/47, C08K 5/18;**
**C08L 15/00, C08L 91/00, C08L 53/02, C08K 3/36, C08K 3/04, C08K 5/548, C08K 3/06, C08K 5/09, C08K 3/22, C08K 5/31, C08K 5/47, C08K 5/18;**
C08F 236/06, C08F 212/08

## Description

TECHNICAL FIELD

The present invention relates to a polymer composition and a tire, and more particularly relates to: a polymer composition that is suitable as a material constituting tire components such as a sidewall, a bead filler, a base tread and a tread; and a tire having a component obtained from the polymer composition.

BACKGROUND ART

A rubber elastic body used in tire components such as a sidewall, a bead filler, a base tread and a tread is required to have excellent strength. As a polymer composition from which such a rubber elastic body can be obtained, there is known a polymer composition that contains, as a rubber component, a highly saturated conjugated diene-based polymer that is a hydrogenated product of a copolymer of a conjugated diene compound and an aromatic vinyl compound (for example, see Patent Literature 1).

However, the polymer composition containing a highly saturated conjugated diene-based polymer has a problem in that although a rubber elastic body obtained from the polymer composition has high strength, processability is low.

As a material constituting a chafer of a tire, there is known a rubber composition for chafers that contains, as a rubber component, diene-based rubber and hydrogenated liquid polybutadiene (for example, see Patent Literature 2) .

In Patent Literature 2, it is disclosed that since the rubber composition for chafers contains diene-based rubber and hydrogenated liquid polybutadiene, favorable processability is achieved, and a rubber elastic body obtained from the rubber composition has high strength.

In Patent Literature 3, it is disclosed a tire comprising a rubber composition comprising a polybutadiene and a hydrogenated styrene butadiene copolymer, which exhibits steering stability, flex crack growth resistance, tip cut resistance and fuel economy.

Under such circumstances, the present inventors attempted to formulate, to a polymer composition containing a highly saturated conjugated diene-based polymer, another polymer together with the highly saturated conjugated diene-based polymer. As a result, it was revealed that sufficient studies are necessary. Specifically, it was revealed that when in a polymer composition containing a highly saturated conjugated diene-based polymer, another polymer is formulated as a rubber component together with the highly saturated conjugated diene-based polymer for improving processability, a problem is raised in that a rubber elastic body obtained from the polymer composition has reduced strength.

CITATION LIST

PATENT LITERATURE

Patent Literature 1: International Publication No. 2014/133097
Patent Literature 2: Japanese Patent Application Laid-Open No. 2010-70641
Patent Literature 3: JP 2016 069628

SUMMARY OF INVENTION

Technical Problem

The present invention has been made in view of the foregoing circumstances, and has as its object the provision of: a polymer composition from which a rubber elastic body having high strength is obtained and in which excellent processability is achieved; and a tire having excellent strength.

Solution to Problem

The polymer composition according to the present invention includes:

a polymer (A) having a 1,2-polybutadiene chain (provided that a polymer falling within the definition for the below-described polymer (B) is excluded); and

a polymer (B) having a structural unit derived from a conjugated diene compound and a structural unit derived from

an aromatic vinyl compound, in which the conjugated diene compound in the structural unit derived from a conjugated diene compound contains butadiene, and the following mathematical formula (i) is satisfied when the composition ratios of a structural unit represented by the following chemical formula (1), a structural unit represented by the following chemical formula (2), a structural unit represented by the following chemical formula (3) and a structural unit represented by the following chemical formula (4) are p mol%, q mol%, r mol% and s mol%, respectively, and wherein the polymer (B) has a random copolymer moiety in which the distribution of the structural units derived from the conjugated diene compound and the structural units derived from the aromatic vinyl compound is irregular.

[Chemical Formula 1]

Chemical Formula (1)

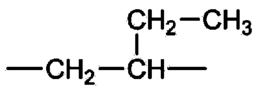

Chemical Formula (2)

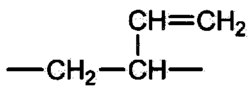

Chemical Formula (3)

$$-CH_2-CH_2-$$

Chemical Formula (4)

$$-CH_2-CH=CH-CH_2-$$

[Mathematical Formula 1]

Mathematical Formula (i)

$$0.70 \leq [(p + 0.5r)/(p + q + 0.5r + s)] \leq 0.99$$

In the polymer composition according to the present invention, the 1, 2-polybutadiene chain in the polymer (A) may preferably be a syndiotactic-1,2-polybutadiene chain.

In the polymer composition according to the present invention, the 1, 2-polybutadiene chain in the polymer (A) may preferably have a 1,2-vinyl bond content of not lower than 70%.

In the polymer composition according to the present invention, the polymer (B) may preferably have a weight-average molecular weight of 100,000 to 2,000,000.

In the polymer composition according to the present invention, the aromatic vinyl compound in the structural unit derived from an aromatic vinyl compound in the polymer (B) may preferably contain styrene, and the content ratio of the structural unit derived from the aromatic vinyl compound may preferably be 5 to 45% by mass per 100% by mass of the polymer (B) .

In the polymer composition according to the present invention, the mass ratio (polymer (A) / polymer (B)) of the polymer (A) and the polymer (B) is 8/92 to 50/50.

The polymer composition according to the present invention may preferably include at least one filling agent

selected from the group consisting of silica and carbon black.

The tire according to the present invention has at least one component selected from the group consisting of a sidewall, a bead filler, a base tread and a tread each obtained from the above-described polymer composition.

ADVANTAGEOUS EFFECTS OF INVENTION

The polymer composition according to the present invention includes a polymer (A) having a 1,2-polybutadiene chain (provided that a polymer falling within the definition for the below-described polymer (B) is excluded), and a polymer (B) having a structural unit derived from a conjugated diene compound containing butadiene and a structural unit derived from an aromatic vinyl compound in which the carbon-carbon single bond ratio in the structural unit derived from a conjugated diene compound falls within a specific range. Therefore, a rubber elastic body obtained from the polymer composition has high strength, and excellent processability is achieved.

Since the tire according to the present invention has at least any component of a sidewall, a bead filler, a base tread and a tread which is formed of the polymer composition according to the present invention, the component can have high strength and a desired shape, and thus excellent performance can be achieved.

DESCRIPTION OF EMBODIMENTS

Hereinafter, embodiments of the present invention will be described.

Polymer composition:

The polymer composition according to the present invention includes at least: a polymer (A) having a 1,2-polybutadiene chain (provided that a polymer falling within the definition for the below-described polymer (B) is excluded) (hereinafter, also referred to as "polymer (A)"); and a polymer (B) having a structural unit derived from a conjugated diene compound and a structural unit derived from an aromatic vinyl compound, in which the conjugated diene compound in the structural unit derived from a conjugated diene compound contains butadiene, and the following mathematical formula (i) is satisfied when the composition ratios of a structural unit represented by the following chemical formula (1), a structural unit represented by the following chemical formula (2), a structural unit represented by the following chemical formula (3) and a structural unit represented by the following chemical formula (4) are p mol%, q mol%, r mol% and s mol%, respectively, and wherein the polymer (B) has a random copolymer moiety in which the distribution of the structural units derived from the conjugated diene compound and the structural units derived from the aromatic vinyl compound is irregular (hereinafter, also referred to as "polymer (B)).

[Chemical Formula 2]

Chemical Formula (1)

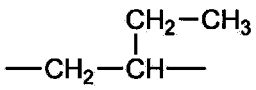

Chemical Formula (2)

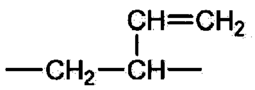

Chemical Formula (3)

$$-CH_2-CH_2-$$

Chemical Formula (4)

$$-CH_2-CH=CH-CH_2-$$

[Mathematical Formula 2]

Mathematical Formula (i)

$$0.70 \leq [(p + 0.5r)/(p + q + 0.5r + s)] \leq 0.99$$

The polymer composition according to the present invention is a composition (unvulcanized rubber composition) obtained by kneading the polymer (A) and the polymer (B), specifically, by kneading respective elements constituting the polymer composition, and forms a rubber elastic body (crosslinked rubber elastic body) by performing, for example, a crosslinking treatment such as vulcanization.

In the polymer composition according to the present invention, the polymer (A) and the polymer (B) constitute a rubber component, and the rubber component may contain an optional component in addition to the polymer (A) and polymer (B) that serve as essential components.

In the polymer composition according to the present invention, the mass ratio (polymer (A) / polymer (B)) of the polymer (A) and the polymer (B) is 8/25 to 50/50, preferably 8/92 to 30/70.

In the mass ratio (polymer (A) / polymer (B)), when the amount of polymer (A) is excessively large, i.e., the amount of the polymer (B) is excessively small, sufficient strength may not be obtained for the rubber elastic body obtained from the polymer composition. On the other hand, when the amount of the polymer (A) is excessively small, that is, the amount of the polymer (B) is excessively large, sufficient processability may not be obtained.

Polymer (A):

As the polymer (A) used, may be mentioned 1,2-polybutadiene and a block copolymer having a 1,2-polybutadiene segment.

In the polymer (A), from the viewpoint of processability, the 1,2-polybutadiene chain may preferably be a syndiotactic-1,2-polybutadiene chain. That is, as the polymer (A), it is preferable to use syndiotactic-1,2-polybutadiene or a block copolymer having a syndiotactic-1,2-polybutadiene segment. As specific examples of the block copolymer

having a syndiotactic-1,2-polybutadiene segment, may be mentioned cis-1,4-polybutadiene modified with syndiotactic-1,2-polybutadiene (commonly referred to as "vinyl·cis-butadiene rubber (VCR)").

In the polymer (A), the 1,2-vinyl bond content in the 1, 2-polybutadiene chain may preferably be not less than 70%, more preferably not less than 85%, still more preferably not less than 90%.

When the 1,2-vinyl bond content in the polymer (A) is too small, the crystallizability of the polymer (A) is lowered, and so the processability of the resulting polymer composition may be reduced.

In the present invention, the "1,2-vinyl bond content" is a value obtained by the infrared absorption spectroscopy (Morello method).

The polymer (A) may preferably have a degree of crystallinity of 15 to 50%, more preferably 18 to 40%.

When the degree of crystallinity of the polymer (A) is too low, sufficient strength may not be obtained for the rubber elastic body obtained from the polymer composition.

On the other hand, when the degree of crystallinity of the polymer (A) is excessively high, it is necessary to prepare the polymer composition at a high temperature, and so the processability may be reduced due to thermal degradation or scorch.

In the present invention, the "degree of crystallinity" is a value obtained by a density gradient tube method using values of 0. 892 g/cm$^3$ as a density of 1,2-polybutadiene having a degree of crystallinity of 0% and 0.963 g/cm$^3$ as a density of 1,2-polybutadiene having a degree of crystallinity of 100%.

The polymer (A) may preferably have a melting point (Tm) of 50 to 150°C, more preferably 60 to 140°C.

When the melting point (Tm) of the polymer (A) is 50 to 150°C, it is possible to form a rubber elastic body which is more excellent in the balance of heat resistance, mechanical strength and flexibility.

The polymer (A) may preferably have a weight-average molecular weight (Mw) of 10, 000 to 5, 000, 000, more preferably 10,000 to 1,500,000, further preferably 50,000 to 1,000,000.

When the weight-average molecular weight (Mw) of the polymer (A) is less than 10, 000, the fluidity when the polymer (A) is heated and melted becomes too high, and so the processability tends to be reduced.

On the other hand, when the weight-average molecular weight (Mw) of the polymer (A) exceeds 5, 000, 000, the fluidity when the polymer (A) is heated and melted is lowered, and so the processability tends to be reduced.

The polymer (A) may contain a small amount of a structural unit derived from a conjugated diene other than butadiene in the 1,2-polybutadiene chain. As the conjugated diene used other than butadiene, may be mentioned 1,3-pentadiene, a 1,3-butadiene derivative substituted with a higher alkyl group and 2-alkyl-substituted 1,3-butadiene.

As specific examples of 1,3-butadiene derivatives substituted with a higher alkyl group, may be mentioned 1-pentyl-1,3-butadiene, 1-hexyl-1,3-butadiene, 1-heptyl-1,3-butadiene and 1-octyl-1,3-butadiene.

As examples of 2-alkyl-substituted 1,3-butadiene, may be mentioned 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1,3-butadiene, 2-cyclohexyl-1,3-butadiene, 2-isohexyl-1,3-butadiene, 2-heptyl-1,3-butadiene, 2-isoheptyl-1,3-butadiene, 2-octyl-1,3-butadiene and 2-isooctyl-1,3-butadiene.

Among these conjugated dienes other than butadiene, isoprene and 1,3-pentadiene are preferable.

The ratio of the polymer (A) in the rubber component of the polymer composition according to the present invention is as described above.

Among the polymers (A),
syndiotactic-1,2-polybutadiene is obtained by polymerizing butadiene, for example, in the presence of a polymerization catalyst containing a cobalt compound and an aluminoxane.

As the cobalt compound constituting the aforementioned polymerization catalyst, an organic acid salt of an organic acid having 4 or more carbon atoms and cobalt may preferably be used.

As specific examples of such organic acid salts, may be mentioned a butyric acid salt, a hexanoic acid salt, a heptenoic acid salt, salts of octylic acids such as 2-ethylhexylic acid salt, a decanoic acid salt, higher fatty acid salts such as a stearic acid salt, an oleic acid salt and an erucic acid salt, a benzoic acid salt, a tolilic acid salt, a xylic acid salt, salts of benzoic acids substituted with an alkyl group, an aralkyl group or an allyl group, such as ethylbenzoic acid and salts of naphthoic acids substituted with an alkyl group, an aralkyl group or an allyl group. Among these, salts of octylic acids such as 2-ethylhexylic acid, a stearic acid salt and a benzoic acid salt are preferable because they have excellent solubility in hydrocarbon solvents.

As examples of the used aluminoxane constituting the aforementioned polymerization catalyst, may be mentioned those represented by the following general formula (1) or the following general formula (2).

[Chemical Formula 3]

General formula (1)

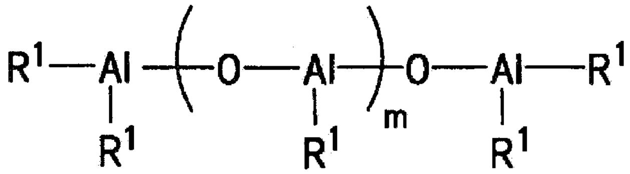

[Chemical Formula 4]

General formula (2)

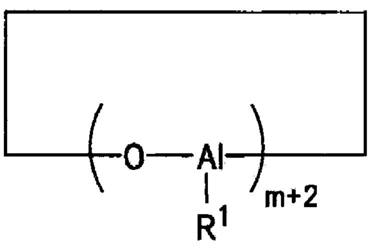

In the above-described general formula (1) and the above-described general formula (2), $R^1$s are each independently a methyl group, an ethyl group, a propyl group or a butyl group, preferably a methyl group or an ethyl group, particularly preferably a methyl group. Further, m is an integer of not less than 2, preferably not less than 5, more preferably 10 to 100.

As specific examples of such aluminoxanes, may be mentioned methylaluminoxane, ethylaluminoxane, propylaluminoxane and butylaluminoxane. Among these, methylaluminoxane is preferable.

The polymerization catalyst may preferably contain a phosphine compound in addition to the aforementioned cobalt compound and aluminoxane. The phosphine compound is an effective component for controlling the activation of the polymerization catalyst, the vinyl bond structure, and the crystallizability. As such a phosphine compound, an organophosphorus compound represented by the following general formula (3) can be used.

[Chemical Formula 5]

General Formula (3) $P(Ar)_n(R^2)_{3-n}$

In the above-described general formula (3), $R^2$ represents a cycloalkyl group or an alkyl-substituted cycloalkyl group, n is an integer of 0 to 3, and Ar represents a group represented by the following general formula (4).

[Chemical Formula 6]

General Formula (4)

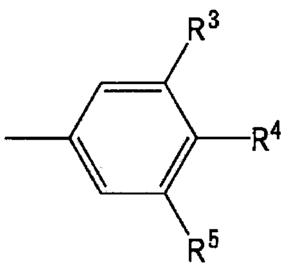

In the above-described general formula (4), $R^3$, $R^4$ and $R^5$ each independently represent a hydrogen atom, an

alkyl group, a halogen atom, an alkoxy group or an aryl group.

Among the groups represented by $R^3$, $R^4$ and $R^5$ in the above-described general formula (4), an alkyl group having 1 to 6 carbons may be preferable as the alkyl group. Among the groups represented by $R^3$, $R^4$ and $R^5$, an alkoxy group having 1 to 6 carbons may be preferable as the alkoxy group. Further, among the groups represented by $R^3$, $R^4$ and $R^5$, an aryl group having 6 to 12 carbons may be preferable as the aryl group.

As specific examples of the organophosphorus compounds represented by the above-described general formula (3), may be mentioned triphenylphosphine, tris(3-methylphenyl)phosphine, tris(3-ethylphenyl)phosphine, tris(3,5-dimethylphenyl)phosphine, tris(3,4-dimethylphenyl)phosphine, tris(3-isopropylphenyl)phosphine, tris(3-t-butylphenyl)phosphine, tris(3,5-diethylphenyl)phosphine, tris(3-methyl-5-ethylphenyl)phosphine, tris(3-phenylphenyl)phosphine, tris(3,4,5-trimethylphenyl)phosphine, tris(4-methoxy-3,5-dimethylphenyl)phosphine, tris(4-ethoxy-3,5-diethylphenyl)phosphine, tris(4-butoxy-3,5-dibutylphenyl)phosphine, tri(p-methoxyphenylphosphine), tricyclohexylphosphine, dicyclohexylphenylphosphine, tribenzylphosphine, tri(4-methylphenylphosphine) and tri(4-ethylphenylphosphine). Among these, triphenylphosphine, tris(3-methylphenyl)phosphine and tris(4-methoxy-3,5-dimethylphenyl)phosphine are particularly preferable.

As the polymerization catalyst, a cobalt compound represented by the following general formula (5) may also be used.

[Chemical Formula 7]

General Formula (5)

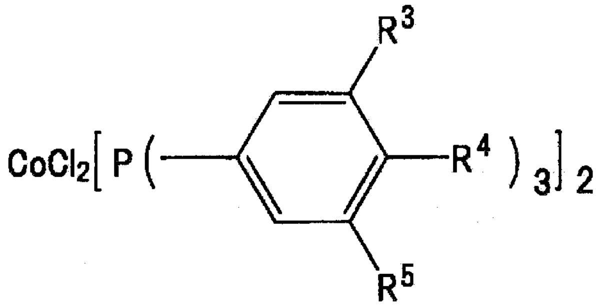

In the above-described general formula (5), $R^3$, $R^4$ and $R^5$ each independently represent a hydrogen atom, an alkyl group, a halogen atom, an alkoxy group or an aryl group.

The cobalt compound represented by the above-described general formula (5) is a complex having cobalt chloride and a phosphine compound in which n is 3 in the above-described general formula (3) as a ligand with respect to cobalt chloride. The cobalt compound may be used in a pre-synthesized form or according to a method in which cobalt chloride and a phosphine compound are brought into contact with each other in a polymerization system. A variety of phosphine compounds in the complex can be selected to control the 1,2-vinyl bond content and degree of crystallinity of the resulting syndiotactic-1,2-polybutadiene.

As specific examples of the cobalt compound represented by the above-described general formula (5), may be mentioned cobalt bis(triphenylphosphine) dichloride, cobalt bis[tris(3-methylphenylphosphine)] dichloride, cobalt bis[tris(3,5-dimethylphenylphosphine)] dichloride and cobalt bis[tris(4-methoxy-3,5-dimethylphenylphosphine)] dichloride.

The used amount of the cobalt compound may preferably be an amount of 0.001 to 1 mmol, more preferably an amount of 0.01 to 0.5 mmol, in terms of cobalt atom per 1 mole of butadiene in the case of homopolymerization of butadiene or per 1 mole of the total amount of butadiene and other conjugated dienes in the case of copolymerization of butadiene and the other conjugated dienes.

The used amount of the phosphine compound is an amount in which the ratio (P/Co) of the phosphorus atom to the cobalt atom in the cobalt compound is usually 0.1 to 50, preferably 0.5 to 20, and more preferably 1 to 20.

Further, the used amount of aluminoxane is an amount in which the ratio (Al/Co) of the aluminum atom to the cobalt atom in the cobalt compound is usually 4 to 107, preferably 10 to 106.

When a cobalt compound represented by the above-described general formula (5) is used as the polymerization catalyst, the ratio (P/Co) of the phosphorus atom to the cobalt atom is 2, and the used amount of aluminoxane falls within the above-described range.

As the polymerization solvent used, may be mentioned an aromatic hydrocarbon solvent such as benzene, toluene, xylene and cumene; an aliphatic hydrocarbon solvent such as n-pentane, n-hexane and n-butane; an alicyclic hydrocarbon solvent such as cyclopentane, methylcyclopentane and cyclohexane; and mixtures thereof.

The polymerization temperature may preferably be -50 to 120°C, more preferably -20 to 100°C. The polymerization reaction may be performed in a batch system or continuous system. The concentration of the monomer in the solvent may preferably be 5 to 50% by mass, more preferably 10 to 35% by mass.

In addition, in order to prevent deactivation of the catalyst and the polymer in the polymer production process, it is preferable to take care to minimize mixing of a compound having a deactivating action such as oxygen, water, or carbon dioxide into the polymerization system. Once the polymerization reaction has proceeded to a desired stage, alcohol, another polymerization terminator, an anti-aging agent, an antioxidant, a ultraviolet absorber and the like can be added to the reaction mixture. Then, the resulting polymer is separated, washed and dried according to conventional methods, and so the desired syndiotactic-1,2-polybutadiene can be obtained.

In the case where a block copolymer is used as the polymer (A), the polymer segment other than the 1,2-polybutadiene segment may preferably be those composed of a structural unit derived from one or more monomers selected from the group consisting of butadiene, ethylene, propylene, isoprene and styrene.

The ratio of the 1,2-polybutadiene segment in the polymer (A) may preferably be not less than 50% by mass, more preferably not less than 60% by mass.

As specific examples of the polymer (A), may be mentioned commercial products such as "RB810," "RB820," "RB830" and "RB840" manufactured by JSR Corporation, and "UBEPOL VCR412" and "UBEPOL VCR617" manufactured by Ube Industries, Ltd.

Polymer (B):

The polymer (B) is one in which the conjugated diene compound in the structural unit derived from a conjugated diene compound contains butadiene, and the following mathematical formula (i) is satisfied when the composition ratios of a structural unit represented by the following chemical formula (1), a structural unit represented by the following chemical formula (2), a structural unit represented by the following chemical formula (3) and a structural unit represented by the following chemical formula (4) are p mol%, q mol%, r mol% and s mol%, respectively.

Here, the structural unit represented by the following chemical formula (1), the structural unit represented by the following chemical formula (2), the structural unit represented by the following chemical formula (3), and the structural unit represented by the following chemical formula (4) each constitute the structural unit derived from a conjugated diene compound.

[Chemical Formula 8]

Chemical Formula (1)

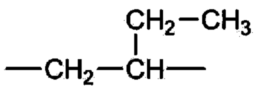

Chemical Formula (2)

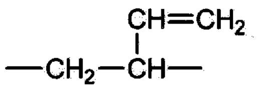

Chemical Formula (3)

$$—CH_2—CH_2—$$

Chemical Formula (4)

$$—CH_2—CH{=}CH—CH_2—$$

[Mathematical formula 3]

Mathematical Formula (i)

$$0.70 \leq [(p + 0.5r)/(p + q + 0.5r + s)] \leq 0.99$$

When the value of [(p + 0.5r)/(p + q + 0.5r + s)] according to the above-described mathematical formula (i) is less than 0.70, sufficient strength may not be obtained for the rubber elastic body obtained from the polymer composition.

On the other hand, when the value of [(p + 0.5r) / (p + q + 0.5r + s)] according to the above-described mathematical formula (i) exceeds 0.99, sufficient processability may not be obtained.

Here, the value of [(p + 0.5r)/(p + q + 0.5r + s)] according to the above-described mathematical formula (i), which indicates the ratio of carbon-carbon single bond, that is, the hydrogenation rate, in the structural units derived from the conjugate die compound, can be calculated from $^1$H-NMR spectrum.

Specifically, as the polymer (B) used, may be mentioned a highly saturated conjugated diene-based polymer which is a hydrogenated product of a copolymer of a conjugated diene compound containing butadiene and an aromatic vinyl compound.

The highly saturated conjugated diene-based polymer constituting the polymer (B) can be produced by producing an unhydrogenated copolymer from a conjugated diene compound containing butadiene and an aromatic vinyl compound, and hydrogenating the resulting unhydrogenated copolymer. The unhydrogenated copolymer obtained in the production process of the highly saturated conjugated diene-based polymer has a random copolymer moiety in which the distribution of the structural units derived from the conjugated diene compound and the structural units derived from the aromatic vinyl compound is irregular. The unhydrogenated copolymer may further include a block moiety composed of a structural unit derived from a conjugated diene compound or a structural unit derived from an aromatic vinyl compound.

As described above, the polymer (B) has a hydrogenation rate of not less than 70% and not more than 99%.

The polymer (B) may preferably have a weight-average molecular weight (Mw) of 100,000 to 2,000,000, more preferably 150,000 to 1,500,000, and still more preferably 170,000 to 1,000,000.

When the weight-average molecular weight (Mw) of the polymer (B) is excessively small, the resulting rubber

elastic body tends to have a low fuel consumption performance when applied to a tire and a low wear resistance when used for a tread.

On the other hand, when the weight-average molecular weight (Mw) of the polymer (B) is excessively large, processability may be reduced.

The ratio of the polymer (B) in the rubber component of the polymer composition according to the present invention may preferably be 50 to 95% by mass as described above.

As the aromatic vinyl compound, styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, tert-butoxydimethylsilylstyrene and isopropoxydimethylsilylstyrene may be used either singly or in any combination thereof. Among these, styrene is preferable.

When the aromatic vinyl compound is styrene, that is, when the aromatic vinyl compound in the structural unit derived from an aromatic vinyl compound in the polymer (B) is styrene, the content ratio of the structural unit derived from styrene in 100% by mass of the polymer (B) may preferably be 5 to 50% by mass, more preferably 10 to 50% by mass, further preferably 15 to 45% by mass.

By setting the content ratio of the structural unit derived from styrene to fall within the above-described range, both productivity and strength can be simultaneously achieved, and moreover, both low hysteresis loss characteristics and wet skid resistance can be simultaneously achieved.

As the polymerization method used for obtaining the unhydrogenated copolymer from a conjugated diene compound and an aromatic vinyl compound, any of a solution polymerization method, a gas-phase polymerization method and a bulk polymerization method may be used, and a solution polymerization method is particularly preferable. As the polymerization scheme, either a batch system or a continuous system may be used. As examples of the specific polymerization method when a solution polymerization method is adopted, may be mentioned a method of polymerizing monomers containing a conjugated diene compound and an aromatic vinyl compound in an organic solvent in the presence of a polymerization initiator and, as necessary, a randomizer.

The polymerization reaction may be performed using a mixture of at least one of an alkali metal compound and an alkaline earth metal compound as a polymerization initiator and a compound having a functional group interacting with silica. By performing polymerization in the presence of the mixture, the polymerization initiation terminal of the resulting unhydrogenated copolymer (conjugated diene-based polymer) can be modified with a functional group interacting with silica. In this specification, the "functional group interacting with silica" means a group having an element interacting with silica such as nitrogen, sulfur, phosphorus or oxygen. "Interaction" means formation of covalent bonds between molecules, or formation of intermolecular forces weaker than covalent bonds (for example, electromagnetic forces acting between molecules such as ion-dipole interactions, dipole-dipole interactions, hydrogen bonds, van der Waals forces, etc.).

As the organic solvent, a hydrocarbon solvent may be used. As specific examples thereof, may be mentioned propane, n-butane, isobutane, n-pentane, isopentane, n-hexane, cyclohexane, propene, 1-butene, isobutene, trans-2-butene, cis-2-butene, 1-pentine, 2-pentine, 1-hexene, 2-hexene, benzene, toluene, xylene, ethylbenzene, heptane, cyclopentane, methylcyclopentane, methylcyclohexane, 1-pentene, 2-pentene and cyclohexene. These compounds may be used either singly or in any combination thereof.

As the alkali metal compound and the alkaline earth metal compound constituting the polymerization initiator, an organic alkali metal compound and an organic alkaline earth metal compound are used. The organic alkali metal compound and the organic alkaline earth metal compound are not particularly limited, but may be mentioned an organolithium compound and a lithium amide compound as suitable examples. When the former organolithium compound is used, an unhydrogenated copolymer (conjugated diene-based polymer) having a hydrocarbon group at the polymerization initiation terminal and having the other terminal serving as a polymerization active moiety is obtained. When the latter lithium amide compound is used, an unhydrogenated copolymer (conjugated diene-based polymer) having a nitrogen-containing group at the polymerization initiation terminal and having the other terminal serving as a polymerization active moiety is obtained.

The organolithium compound may preferably have a hydrocarbon group having 1 to 20 carbon atoms, and examples thereof include methyllithium, ethyllithium, n-propyllithium, iso-propyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium and a reaction product of diisopropenylbenzene and butyllithium. Among these, n-butyllithium and sec-butyllithium are preferable.

On the other hand, as examples of the lithium amide compound, may be mentioned lithium hexamethyleneimide, lithium pyrrolidide, lithium piperidide, lithium heptamethylenimide, lithium dodecamethyleneimide, lithium morpholide, lithium dimethylamide, lithium diethylamide, lithium dibutylamide, lithium dipropylamide, lithium diisopropylamide, lithium diheptylamide, lithium dihexylamide, lithium dioctylamide, lithium di-2-ethylhexylamide, lithium didecylamide, lithium N-methylpiperadide, lithium ethylpropylamide, lithium ethylbutylamide, lithium ethylbenzylamide and lithium methylphenethylamide. Among these, cyclic lithium amides such as lithium hexamethyleneimide, lithium pyrrolidide, lithium piperidide, lithium heptamethyleneimide and lithium dodecamethyleneimide are preferable from the viewpoint of interaction effect on filling agents (specifically, carbon black and silica) to be described later and polymerization initiation ability, and lithium hexamethyleneimide, lithium pyrrolidide and lithium piperidide are particularly preferable.

The method and conditions for hydrogenating the unhydrogenated copolymer (conjugated diene-based polymer) are not particularly limited as long as a highly saturated conjugated diene-based polymer having a desired hydrogenation rate can be obtained. As examples of the hydrogenation method, may be mentioned a method in which a catalyst containing an organometallic compound of titanium as a main component is used as a hydrogenation catalyst, a method in which a catalyst composed of an organic compound of iron, nickel or cobalt and an organometallic compound of alkylaluminum is used, a method in which an organic complex of an organometallic compound of ruthenium, rhodium, or the like is used and a method in which a catalyst in which a metal such as palladium, platinum, ruthenium, cobalt, or nickel is supported on a support such as carbon, silica or alumina is used. Among the various methods, a method of performing hydrogenation under mild conditions at low pressure and low temperature using an organometallic compound of titanium alone or a homogeneous catalyst composed of the organometallic compound of titanium and an organometallic compound of lithium, magnesium or aluminum (see Japanese Examined Patent Application Publications Nos. Sho. 63-4841 and Hei. 1-37970, etc.) is preferable because of industrial point of view and high hydrogenation selectivity to double bonds derived from butadiene.

The hydrogenation is performed in a solvent which is inert to the catalyst and in which the unhydrogenated copolymer (conjugated diene-based polymer) is soluble. As the preferable solvents, may be mentioned an aliphatic hydrocarbon such as n-pentane, n-hexane and n-octane, an alicyclic hydrocarbon such as cyclohexane and cycloheptane, an aromatic hydrocarbon such as benzene and toluene, ethers such as diethyl ether and tetrahydrofuran, and mixtures thereof containing them as main components.

The hydrogenation reaction is generally performed by maintaining the polymer at a predetermined temperature under hydrogen or an inert atmosphere, adding a hydrogenation catalyst under stirring or non-stirring, and then introducing hydrogen gas and pressurizing it to a predetermined pressure. The inert atmosphere means an atmosphere that does not react with any participant in the hydrogenation reaction, and is formed of, for example, helium, neon, argon or the like. The hydrogenation reaction process for obtaining the highly saturated conjugated diene-based polymer may adopt any of a batch process, a continuous process, and a combination thereof. The added amount of the hydrogenation catalyst may preferably be 0.02 to 20 mmol per 100g of the unhydrogenated copolymer (conjugated diene-based polymer).

Filling agent:

The polymer composition according to the present invention may contain a filling agent. As such a filling agent used, may be mentioned silica and carbon black.

As specific examples of the silica used as the filling agent, may be mentioned wet silica (hydrous silicic acid), dry silica (anhydrous silicic acid), calcium silicate and aluminum silicate. Among these, wet silica is preferable.

As specific examples of carbon blacks used as the filling agent, may be mentioned carbon blacks of various grades such as SRF, GPF, FEF, HAF, ISAF and SAF. Among these, HAF, ISAF and SAF are preferable from the viewpoint of excellent wear resistance obtained.

As the carbon black, carbon black having an iodine adsorption (IA) of not less than 60 mg/g and a dibutyl phthalate oil absorption (DBP) of not less than 80 ml/100g is preferable. The use of such carbon black improves the grip performance and the fracture resistance of the rubber elastic body obtained from the polymer composition.

The use ratio of the filling agent is 10 to 200 parts by mass, preferably 25 to 100 parts by mass, per 100 parts by mass of the rubber component.

When silica is used as the filling agent, a silane coupling agent may be contained.

Specific examples of the silane coupling agent may include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane and 2-mercaptoethyltriethoxysilane; and 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazolyl tetrasulfide. These silane coupling agents may be used either singly or in any combination thereof. Among these, bis(3-triethoxysilylpropyl) trisulfide and 3-trimethoxysilylpropylbenzothiazolyl tetrasulfide may preferably be used from the viewpoint of the effect of improving the reinforcing property.

The use ratio of the silane coupling agent may preferably be 0.5 to 20 parts by mass per 100 parts by mass of silica.

Other components:

The polymer composition according to the present invention may contain various additives in addition to the rubber components and filling agent.
As examples of such additives used, may be mentioned a vulcanizing agent, a vulcanization aid, a processing aid, a vulcanization promoter, an extender oil (process oil), an anti-aging agent, a scorch retarder and zinc oxide.
Sulfur is usually used as the vulcanizing agent.
The use ratio of the vulcanizing agent may preferably be 0.1 to 3 parts by mass, more preferably 0.5 to 2 parts by mass, per 100 parts by mass of the rubber component.
Stearic acid is generally used as the vulcanizing aid and the processing aid, and the use ratio thereof may preferably be 0.5 to 5 parts by mass per 100 parts by mass of the rubber component.
The vulcanization promoter is not particularly limited, and as preferred examples thereof, may be mentioned a thiazole-based vulcanization promoter such as dibenzothiazyl disulfide (MBTS), a guanidine-based vulcanization promoter such as diphenylguanidine (DPG), a sulfenamide-based vulcanization promoter such as N-cyclohexyl-2-benzothiazylsulfenamide (CBS) and N-tetra-butyl-2-benzothiazylsulfenamide (TBBS), a dithiocarbamate-based vulcanization promoter such as zinc diethyldithiocarbamate (ZnEDC) and tellurium diethyldithiocarbamate (TeEDC), a thiuram-based vulcanization promoter such as tetraethylthiuram disulfide (TETD), tetrabenzylthiuram disulfide (TBzTD) and tetrakis(2-ethylhexyl) thiuram disulfide and a thiourea-based vulcanization promoter such as N,N'-ethylthiourea (DEU).
The use ratio of the vulcanization promoter may preferably be 0.1 to 5 parts by mass, more preferably 0.2 to 3 parts by mass, per 100 parts by mass of the rubber component.

Preparation of polymer composition:

The polymer composition according to the present invention is prepared by kneading a rubber component as well as a filling agent and an additive used as necessary, at a temperature not lower than the melting point of the polymer (B) .
As examples of a kneader used for the preparation of the polymer composition according to the present invention, may be mentioned open or closed kneaders such as a plastomill, a Banbury mixer, a roll and an internal mixer.
The above-described polymer composition according to the present invention is an unvulcanized rubber composition, and, for example, subjected to a crosslinking treatment such as vulcanization to form a rubber elastic body (crosslinked rubber elastic body). The polymer composition according to the present invention includes the polymer (A) having a 1,2-polybutadiene chain, and the polymer (B) having the structural unit derived from a conjugated diene compound containing butadiene and the structural unit derived from an aromatic vinyl compound. In the polymer (B), the ratio of a carbon-carbon single bond in the structural unit derived from a conjugated diene compound falls within a specific range. Therefore, the polymer (B), that is, a highly saturated conjugated diene-based polymer, can maintain its strength property, while processability is improved. Accordingly, both excellent tensile strength (breaking strength) and sufficient hardness required of a tire can be obtained, and excellent processability can also be achieved.
Thus, according to the polymer composition of the present invention, a rubber elastic body having high strength is obtained, while excellent processability is achieved.
The inventors repeatedly conducted experiments, and found that the above-described effects can be obtained by using, in the polymer composition for obtaining a rubber elastic body, the polymer (A) having a 1,2-polybutadiene chain, and the polymer (B) that has the structural unit derived from a conjugated diene compound containing butadiene and the structural unit derived from an aromatic vinyl compound and that satisfies the above-described mathematical formula (i) . It is estimated that the reason why the effects of the present invention can be obtained is as follows.
A highly saturated conjugated diene-based polymer which is a hydrogenated product of a copolymer of a conjugated diene compound and an aromatic vinyl compound has lower processability than that of an unhydrogenated conjugated diene-based polymer (unhydrogenated SBR). Also, formulating another polymer for improving processability reduces strength. However, when a highly saturated conjugated diene-based polymer having a specific hydrogenation rate, that is, the polymer (B), and the polymer (A) having a 1,2-polybutadiene chain are selectively used in the rubber component, the vulcanization speed of a 1,2-vinyl bond according to the polymer (A) is slow, and thus becomes close to the vulcanization speed according to polymer (B), which causes co-crosslinking. Therefore, it is estimated that although the polymer composition according to the present invention has a composition in which another polymer (polymer (A)) is formulated to a highly saturated conjugated diene-based polymer (polymer (B)), a rubber elastic body having high strength is obtained.
The rubber elastic body obtained from the polymer composition according to the present invention is suitably used as a tire, specifically as a sidewall, a bead filler, a base tread and a tread of a tire.
In a tire having a component obtained from such a polymer composition according to the present invention, specifically in a tire having at least any component of a sidewall, a bead filler, a base tread and a tread, that is, in the

tire according to the present invention, the component can have high strength and a desired shape, and thus excellent performance thereof can be achieved.

Here, the tire according to the present invention is produced by a known process using the polymer composition according to the present invention.

That is, for example, the rubber composition (unvulcanized rubber composition) according to the present invention is extruded into the shape of a tire (specifically, the shape of a sidewall, a bead filler, a base tread and a tread) to be formed, and molded on a tire molding machine by a known process to form an uncrosslinked (unvulcanized) tire. This uncrosslinked (unvulcanized) tire is heated and pressurized in a vulcanizer to produce a tire formed of the polymer composition according to the present invention.

EXAMPLES

Although specific examples of the present invention will be described below, the present invention is not limited to these examples.

Also, measurement methods of various physical property values in Examples and Comparative Examples described below are as follows.

1,2-Vinyl bond content:

The 1,2-vinil bond content was measured using an infrared spectrophotometer ("FT/IR-7300 type infrared spectrophotometer" manufactured by Jasco Corporation) by the infrared absorption spectrometry (Morello method).

Value of hydrogenation rate ([(p + 0.5r) / (p + q + 0.5r + s)]):

The value of a hydrogenation rate was calculated from a $^1$H-NMR spectrum at 500 MHz.

Content ratio of structural unit derived from styrene:

The content ratio of the structural unit derived from styrene was calculated from a $^1$H-NMR spectrum at 500 MHz with deuterochloroform as a solvent.

Weight-average molecular weight:

Using a gel permeation chromatography (GPC) apparatus ("HLC-8120" manufactured by Tosoh Corporation), the polystyrene-equivalent weight-average molecular weight was calculated from a retention time corresponding to the top of the maximum peak of a GPC curve obtained under the following GPC conditions.

GPC conditions:

Column: two "GMHXL" (trade name) columns (manufactured by Tosoh Corporation)
Column temperature: 40°C
Mobile phase: tetrahydrofuran
Flow rate: 1.0 ml/min
Sample concentration: 10 mg/20 ml

Production Example 1 of highly saturated conjugated diene-based polymer (conjugated diene-based polymer B1):

Into an autoclave reaction vessel having an inner volume of 50 liters inside air of which had been substituted with nitrogen, there were charged 25800 g of cyclohexane as a solvent, 25.8 g of tetrahydrofuran as a vinyl content adjuster, as well as 1462 g of styrene and 2752 g of 1,3-butadiene as monomers. After the temperature of the contents in the reaction vessel was adjusted to 42°C, a cyclohexane solution containing 3.07 g of n-butyllithium as a polymerization initiator was added to initiate polymerization. The polymerization was performed under adiabatic conditions.

At the point in time when the temperature of the contents in the reaction vessel reached 65°C, 86 g of butadiene as a monomer was added over 1 minute, and further polymerized for 3 minutes. After that, 0.31 g of silicon tetrachloride as a coupling agent was added. After 5 minutes elapsed, 9.1 g of [N,N-bis(trimethylsilyl)aminopropyl]methyldiethoxysilane as a terminal modifier was added to the reaction system, and reacted for 15 minutes.

Next, hydrogen was introduced into the system while the reaction liquid was set to not lower than 80°C. After that, there were added 2.76 g of [bis ($\eta^5$-cyclopentadienyl)titanium(furfuryloxy)chloride] (also referred to as "[chloro-bis(2,4-cyclopentadienyl)titanium (IV) furfurylalkoxide]") as a hydrogenation catalyst, 3.77 g of diethylaluminum chloride, and 1.17 g of n-butyllithium. The mixture was reacted with a hydrogen pressure maintained at not more than 0.7 MPa until the hydrogenation rate reached 95%. After a predetermined hydrogen-equivalent flow rate has been reached, the reaction liquid was returned to normal temperature and normal pressure, and removed from the reaction vessel to obtain a polymer solution. The weight-average molecular weight of the polymer according to this polymer solution was measured by GPC and found to be 200,000.

Next, while the temperature of a liquid phase in a desolvation tank was 95°C, desolvation was performed by steam tripping (steam temperature: 190°C) for 2 hours. Also, drying was performed by a roll heated to 110°C. Accordingly, there was obtained a highly saturated conjugated diene-based polymer (hereinafter, also referred to as a "conjugated diene-based polymer B1") in which the value of [(p + 0.5r) / (p + q + 0.5r + s)] is 0.95, and the weight-average molecular weight is 200,000.

In this conjugated diene-based polymer B1, the content ratio of the structural unit derived from styrene is 34% by mass per 100% by mass of the polymer.

Production Example 1 of polymer having 1,2-polybutadiene chain (conjugated diene-based polymer A1) :

Into an autoclave reaction vessel having an inner volume of 50 liters inside air of which had been substituted with nitrogen, there were charged 25800 g of cyclohexane as a solvent, 725 g of tetrahydrofuran as a vinyl content adjuster, as well as 1462 g of styrene and 2752 g of 1,3-butadiene as monomers. After the temperature of the contents in the reaction vessel was adjusted to 30°C, a cyclohexane solution containing 3.07 g of n-butyllithium as a polymerization initiator was added to initiate polymerization. The polymerization was performed under isothermal conditions.

After 60 minutes, 86 g of butadiene as a monomer was added over 1 minute, and further polymerized for 3 minutes. After that, 0.31 g of silicon tetrachloride as a coupling agent was added. After 5 minutes elapsed, 9.1 g of [N,N-bis(trimethylsilyl)aminopropyl]methyldiethoxysilane as a terminal modifier was added to the reaction system, and reacted for 15 minutes.

Next, hydrogen was introduced into the system while the reaction liquid was set to not lower than 80°C to deactivate remaining active terminals.

Next, while the temperature of a liquid phase in a desolvation tank was 95°C, desolvation was performed by steam tripping (steam temperature: 190°C) for 2 hours. Also, drying was performed by a roll heated to 110°C. Accordingly, there was obtained a polymer having a 1,2-polybutadiene chain (hereinafter, also referred to as a "conjugated diene-based polymer AI"). In this conjugated diene-based polymer A1, the content ratio of the structural unit derived from styrene was 34% by mass per 100% by mass of the polymer, and the 1,2-vinyl bond content was 70%.

Example 1:

Production Example 1 of polymer composition and rubber elastic body:

Firstly, components were formulated according to the chemical composition indicated in Table 1 below, and kneaded to produce a polymer composition. The kneading was performed by the following process.

As a first-stage kneading (indicated as "Kneading A" in Table 1 below), the following components were formulated and kneaded using a plastomill (internal volume: 250 cc) equipped with a temperature controller, under the conditions of a filling factor of 72%, a rotational speed of 60 rpm, a temperature of 100°C, and a kneading time of 3.5 minutes: syndiotactic-1,2-polybutadiene ("RB810" manufactured by JSR Corporation, 1,2-vinyl bond content 90%, degree of crystallinity 20%, melting point 71°C, weight-average molecular weight 220,000, indicated as merely "RB810" in Table 1 below), the conjugated diene-based polymer B1, silica ("ZEOSIL 1165MP" manufactured by Rhodia), carbon black ("Diablack N399(HAF)" manufactured by Mitsubishi Chemical Corporation), a silane coupling agent ("Si75" manufactured by Evonik), extender oil ("process oil T-DAE" manufactured by JX Nippon Oil & Energy Corporation), stearic acid, zinc oxide, and an anti-aging agent ("Ozonone 6C" manufactured by Seiko Chemical Co., Ltd.).

Next, as a second-stage kneading (indicated as "Kneading B" in Table 1 below), the formulated mixture obtained above was cooled to room temperature, and then the following components were formulated and kneaded under the conditions of a temperature of 80°C, a rotational speed of 60 rpm, and a kneading time of 1.5 minutes: two types of vulcanization promoters ("Nocceler D" manufactured by Ouchi Shinko Chemical Industrial Co., Ltd. (diphenylguanidine, indicated as "Vulcanization promoter (1)" in Table 1 below) and "Nocceler CZ" manufactured by Ouchi Shinko Chemical Industrial Co., Ltd. (N-cyclohexyl-2-benzothiazylsulfenamide, indicated as "Vulcanization promoter (2)" in Table 1 below), and a curing agent (sulfur). Accordingly, there was obtained a polymer composition (hereinafter, also referred to as a "polymer composition (1)") having a mass ratio (polymer (A)/polymer (B)) of 10/90.

Next, the obtained polymer composition (1) was molded, and subjected to vulcanization molding by a vulcanization press at 160°C for 30 minutes to obtain a rubber elastic body (hereinafter, also referred to as a "rubber elastic body (1) ") having a predetermined shape according to the following evaluation tests.

Evaluation of polymer composition:

The obtained polymer composition (1) and rubber elastic body (1) were subjected to the following evaluation tests. The results are shown in Table 1.

Evaluation test of processability:

The obtained polymer composition (1) was measured for Mooney viscosity ($ML_{1+4}$, 100°C) in accordance with JIS K6300-1:2013, using an L rotor, under the conditions of a preheating time of 1 minute, a rotor operation time of 4 minutes, and a temperature of 100°C.

Evaluation test of tensile strength:

The obtained rubber elastic body (1) was measured for tensile strength at break (TB) in accordance with JIS K6251:2010, under the condition of a temperature of 23°C.
A larger value of this tensile strength at break (TB) indicates higher tensile strength at break, which is favorable.

Evaluation test of hardness:

The obtained rubber elastic body (1) was measured for hardness (Duro A hardness) in accordance with JIS K6253-3:2012.

Example 2:

A polymer composition (hereinafter, also referred to as a "polymer composition (2)") having a mass ratio (polymer (A) /polymer (B)) of 20/80 and a rubber elastic body (hereinafter, also referred to as a "rubber elastic body (2) ") were produced in the same manner as that in Example 1, except that in Example 1, the use amount of the conjugated diene-based polymer B1 was changed from 90 parts by mass to 80 parts by mass, and the use amount of "RB810" manufactured by JSR Corporation was changed from 10 parts by mass to 20 parts by mass. The obtained polymer composition (2) and rubber elastic body (2) were subjected to evaluation tests in the same methods as those in Example 1. The results are shown in Table 1.

Example 3:

A polymer composition (hereinafter, also referred to as a "polymer composition (3)") having a mass ratio (polymer(A)/polymer (B)) of 10/90 and a rubber elastic body (hereinafter, also referred to as a "rubber elastic body (3) ") were produced in the same manner as that in Example 1, except that "RB820" manufactured by JSR Corporation (1,2-vinyl bond content 92%, degree of crystallinity 25%, melting point 95°C, indicated as merely "RB820" in Table 1 below) was used instead of "RB810" manufactured by JSR Corporation in Example 1. The obtained polymer composition (3) and rubber elastic body (3) were subjected to evaluation tests in the same methods as those in Example 1. The results are shown in Table 1.

Example 4:

A polymer composition (hereinafter, also referred to as a "polymer composition (4)") having a mass ratio (polymer (A) /polymer (B)) of 20/80 and a rubber elastic body (hereinafter, also referred to as a "rubber elastic body (4) ") were produced in the same manner as that in Example 2, except that "RB820" manufactured by JSR Corporation was used instead of "RB810" manufactured by JSR Corporation in Example 2. The obtained polymer composition (4) and rubber elastic body (4) were subjected to evaluation tests in the same methods as those in Example 1. The results are shown in Table 1.

Example 5:

A polymer composition (hereinafter, also referred to as a "polymer composition (5)") having a mass ratio (polymer(A)/polymer (B)) of 10/90 and a rubber elastic body (hereinafter, also referred to as a "rubber elastic body (5) ") were produced in the same manner as that in Example 1, except that "RB830" manufactured by JSR Corporation (1,2-vinyl bond content 93%, degree of crystallinity 29%, melting point 105°C, indicated as merely "RB830" in Table 1 below) was used instead of "RB810" manufactured by JSR Corporation in Example 1. The obtained polymer composition (5) and rubber elastic body (5) were subjected to evaluation tests in the same methods as those in Example 1. The results are shown in Table 1.

Example 6:

A polymer composition (hereinafter, also referred to as a "polymer composition (6)") having a mass ratio (polymer (A) /polymer (B)) of 20/80 and a rubber elastic body (hereinafter, also referred to as a "rubber elastic body (6) ") were produced in the same manner as that in Example 2, except that "RB830" manufactured by JSR Corporation was used instead of "RB810" manufactured by JSR Corporation in Example 2. The obtained polymer composition (6) and rubber elastic body (6) were subjected to the aforementioned evaluation tests. The results are shown in Table 1.

Example 7:

A polymer composition (hereinafter, also referred to as a "polymer composition (7)") having a mass ratio (polymer(A)/polymer (B)) of 10/90 and a rubber elastic body (hereinafter, also referred to as a "rubber elastic body (7) ") were produced in the same manner as that in Example 1, except that "RB840" manufactured by JSR Corporation (1,2-vinyl bond content 94%, degree of crystallinity 36%, melting point 126°C, weight-average molecular weight 150,000, indicated as merely "RB840" in Table 1 below) was used instead of "RB810" manufactured by JSR Corporation in Example 1. The obtained polymer composition (7) and rubber elastic body (7) were subjected to evaluation tests in the same methods as those in Example 1. The results are shown in Table 1.

Example 8:

A polymer composition (hereinafter, also referred to as a "polymer composition (8)") having a mass ratio (polymer (A) /polymer (B)) of 20/80 and a rubber elastic body (hereinafter, also referred to as a "rubber elastic body (8) ") were produced in the same manner as that in Example 2, except that "RB840" manufactured by JSR Corporation was used instead of "RB810" manufactured by JSR Corporation in Example 2. The obtained polymer composition (8) and rubber elastic body (8) were subjected to evaluation tests in the same methods as those in Example 1. The results are shown in Table 1.

Example 9:

A polymer composition (hereinafter, also referred to as a "polymer composition (9)") having a mass ratio (polymer (A) /polymer (B)) of 20/80 and a rubber elastic body (hereinafter, also referred to as a "rubber elastic body (9) ") were produced in the same manner as that in Example 2, except that the conjugated diene-based polymer A1 produced in the aforementioned manner was used instead of "RB810" manufactured by JSR Corporation in Example 2. The obtained polymer composition (9) and rubber elastic body (9) were subjected to evaluation tests in the same methods as those in Example 1. The results are shown in Table 1.

Comparative Example 1:

A polymer composition for comparison (hereinafter, also referred to as a "polymer composition (1) for comparison") and a rubber elastic body for comparison (hereinafter, also referred to as a "rubber elastic body (1) for comparison ") were produced in the same manner as that in Example 1, except that "RB810" manufactured by JSR Corporation was not used in Example 1. The obtained polymer composition (1) for comparison and rubber elastic body (1) for comparison were subjected to the aforementioned evaluation tests. The results are shown in Table 1.

Comparative Example 2:

A polymer composition for comparison (hereinafter, also referred to as a "polymer composition (2) for comparison ") and a rubber elastic body for comparison (hereinafter, also referred to as a "rubber elastic body (2) for comparison") were produced in the same manner as that in Example 2, except that polybutadiene rubber ("BR01" manufactured by JSR Corporation, indicated as merely "BR01" in Table 1 below) was used instead of "RB810" manufactured by JSR Corporation in Example 2. The obtained polymer composition (2) for comparison and rubber elastic

body (2) for comparison were subjected to the aforementioned evaluation tests. The results are shown in Table 1.

Comparative Example 3:

A polymer composition for comparison (hereinafter, also referred to as a "polymer composition (3) for comparison ") and a rubber elastic body for comparison (hereinafter, also referred to as a "rubber elastic body (3) for comparison") were produced in the same manner as that in Example 1, except that in Example 1, "RB810" manufactured by JSR Corporation was not used and the use amount of silica ("ZEOSIL 1165MP" manufactured by Rhodia) was changed from 75 parts by mass to 85 parts by mass. The obtained polymer composition (3) for comparison and rubber elastic body (3) for comparison were subjected to the aforementioned evaluation tests. The results are shown in Table 1.

Comparative Example 4:

A polymer composition for comparison (hereinafter, also referred to as a "polymer composition (4) for comparison ") and a rubber elastic body for comparison (hereinafter, also referred to as a "rubber elastic body (4) for comparison") were produced in the same manner as that in Comparative Example 1, except that 5 parts by mass of a processing aid ("Struktol A50P" manufactured by S & S Japan Co., Ltd.) was further used in Comparative Example 1. The obtained polymer composition (4) for comparison and rubber elastic body (4) for comparison were subjected to the aforementioned evaluation tests. The results are shown in Table 1.

Comparative Example 5:

A polymer composition for comparison (hereinafter, also referred to as a "polymer composition (5) for comparison") and a rubber elastic body for comparison (hereinafter, also referred to as a "rubber elastic body (5) for comparison") were produced in the same manner as that in Example 2, except that solution-polymerized styrene-butadiene rubber containing 41% of vinyl group ("HPR340" manufactured by JSR Corporation, indicated as "SSBR1" in Table 1 below) was used instead of syndiotactic-1,2-polybutadiene ("RB810" manufactured by JSR Corporation) in Example 2. The obtained polymer composition (5) for comparison and rubber elastic body (5) for comparison were subjected to the aforementioned evaluation tests. The results are shown in Table 1.

[Table 1]

| | | | | Comparative Example 1 | Comparative Example 2 | Comparative Example 3 | Conparative Example 4 | Comparative Example 5 | Example 1 | Example 2 | Example 3 | Example 4 | Example 5 | Example 6 | Example 7 | Example 6 | Example 9 |
|---|---|---|---|---|---|---|---|---|---|---|---|---|---|---|---|---|---|
| | | Conjugated diene-based polymer BI | (parts by mass) | 100 | 80 | 100 | 100 | 80 | 90 | 80 | 90 | 80 | 90 | 80 | 90 | 80 | 80 |
| | | BR01 | (parts by mass) | | 20 | | | | | | | | | | | | |
| | | SSBR1 (Vinyl41%) | (parts by mass) | | | | | 20 | | | | | | | | | |
| | | RB810 | (parts by mass) | | | | | | 10 | 20 | | | | | | | |
| | | RB820 | (parts by mass) | | | | | | | | 10 | 20 | | | | | |
| | | RB830 | (parts by mass) | | | | | | | | | | 10 | 20 | | | |
| | | RB840 | (parts by mass) | | | | | | | | | | | | 10 | 20 | |
| | Kneading A | Conjugated diene-based polymer B2 (Vinyl 70%) | (parts by mass) | | | | | | | | | | | | | | 20 |

(continued)

| | | | | Comparative Example 1 | Comparative Example 2 | Comparative Example 3 | Conparative Example 4 | Comparative Example 5 | Example 1 | Example 2 | Example 3 | Example 4 | Example 5 | Example 6 | Example 7 | Example 6 | Example 9 |
|---|---|---|---|---|---|---|---|---|---|---|---|---|---|---|---|---|---|
| Chemical formulation | | silica | (parts by mass) | 75 | 75 | 85 | 75 | 75 | 75 | 75 | 75 | 75 | 75 | 75 | 75 | 75 | 75 |
| | | carbon black | (parts by mass) | 5 | 5 | 5 | 5 | 5 | 5 | 5 | 5 | 5 | 5 | 5 | 5 | 5 | 5 |
| | | Silane coupling agent | (parts by mass) | 6.0 | 6.0 | 6.8 | 6.0 | 6.0 | 6.0 | 6.0 | 6.0 | 6.0 | 6.0 | 6.0 | 6.0 | 6.0 | 6.0 |
| | | Oil | (parts by mass) | 34 | 34 | 34 | 34 | 34 | 34 | 34 | 34 | 34 | 34 | 34 | 34 | 34 | 34 |
| | | Stearic acid | (parts by mass) | 2 | 2 | 2 | 2 | 2 | 2 | 2 | 2 | 2 | 2 | 2 | 2 | 2 | 2 |
| | | Zinc oxide | (parts by mass) | 3 | 3 | 3 | 3 | 3 | 3 | 3 | 3 | 3 | 3 | 3 | 3 | 3 | 3 |
| | | Anti-aging agent | (parts by mass) | 1 | 1 | 1 | 1 | 1 | 1 | 1 | 1 | 1 | 1 | 1 | 1 | 1 | 1 |
| | | Processing aid | (parts by mass) | | | | 5 | | | | | | | | | | |

(continued)

| | | | Comparative Example 1 | Comparative Example 2 | Comparative Example 3 | Conparative Example 4 | Comparative Example 5 | Example 1 | Example 2 | Example 3 | Example 4 | Example 5 | Example 6 | Example 7 | Example 6 | Example 9 |
|---|---|---|---|---|---|---|---|---|---|---|---|---|---|---|---|---|
| | | Subtotal (parts by mass) | 226 | 226 | 236.8 | 231 | 226 | 226 | 226 | 226 | 226 | 226 | 226 | 226 | 226 | 226 |
| | Kneading Θ | Vulcanization promoter (1) (parts by mass) | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Vulcanization promoter (2) (parts by mass) | 1.8 | 1.8 | 1.8 | 1.8 | 1.8 | 1.8 | 1.8 | 1.8 | 1.8 | 1.8 | 1.8 | 1.8 | 1.8 | 1.8 |
| | | sulfur (parts by mass) | 1.5 | 1.5 | 1.5 | 1.5 | 1.5 | 1.5 | 1.5 | 1.5 | 1.5 | 1.5 | 1.5 | 1.5 | 1.5 | 1.5 |
| | Total | (parts by mass) | 230.8 | 230.8 | 241.6 | 235.8 | 230.8 | 230.8 | 230.8 | 230.8 | 230.8 | 230.8 | 230.8 | 230.8 | 230.8 | 203.8 |
| Evaluation of processability | Mooney viscosity of polymer composition (kneaded product by kneading B) ($M_{1+4}$, 100°C) | | 132.7 | 112.6 | 147.4 | 130.0 | 131.0 | 118.5 | 104.3 | 119.8 | 101.7 | 120.4 | 110.3 | 127.5 | 129.1 | 120.0 |
| Vulcanization time (at 160°C) | | (min) | 30 | | | | | | | | | | | | | |
| Evaluation of tensile strength | Tensile strength | TB (MPa) | 31.2 | 16.5 | 33.6 | 30.0 | 15.0 | 27.6 | 25.0 | 28.2 | 25.3 | 26.1 | 25.1 | 28.1 | 24.3 | 22.0 |
| Evaluation of hardness | Hardness | H. (3sec) (Duro A) | 64 | 67 | 67 | 62 | 67 | 66 | 69 | 67 | 72 | 67 | 74 | 69 | 75 | 67 |

It was confirmed from the results of Table 1, according to the polymer compositions of Example 1 to Example 9, a rubber elastic body having high strength can be obtained, and excellent processability can be achieved. Specifically, in the polymer compositions according to Example 1 to Example 9, it was confirmed from the evaluation results of tensile strength and hardness that the rubber elastic bodies have tensile strength and hardness that are almost equivalent to rubber elastic bodies obtained from the polymer compositions according to Comparative Example 1, Comparative Example 3 and Comparative Example 4 in which a polymer other than the highly saturated conjugated diene-based polymer is not formulated to a rubber elastic body, and it was also confirmed from the values of Mooney viscosity that there can be achieved processability that is almost equivalent to Comparative Example 2 in which polybutadiene rubber is formulated to the highly saturated conjugated diene-based polymer.

## Claims

**1.** A polymer composition comprising:

a polymer (A) having a 1,2-polybutadiene chain (provided that a polymer falling within a definition for the below-described polymer (B) is excluded), and
a polymer (B) having a structural unit derived from a conjugated diene compound and a structural unit derived from an aromatic vinyl compound, in which the conjugated diene compound in the structural unit derived from a conjugated diene compound contains butadiene, and a mathematical formula (i) below is satisfied when composition ratios of a structural unit represented by a chemical formula (1) below, a structural unit represented by a chemical formula (2) below, a structural unit represented by a chemical formula (3) below and a structural unit represented by a chemical formula (4) below are p mol%, q mol%, r mol% and s mol%, respectively, and wherein the polymer (B) has a random copolymer moiety in which the distribution of the structural units derived from the conjugated diene compound and the structural units derived from the aromatic vinyl compound is irregular:

[Chemical formula 1]

Chemical Formula (1)

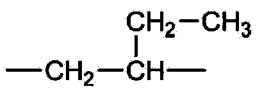

,

Chemical Formula (2)

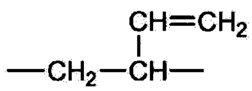

,

Chemical Formula (3)

$$—CH_2—CH_2—$$

Chemical Formula (4)

$$—CH_2—CH=CH—CH_2—$$

, and
[Mathematical Formula 1]

Mathematical Formula (i)

$$0.70 \leq [(p + 0.5r)/(p + q + 0.5r + s)] \leq 0.99,$$

and

wherein a mass ratio (polymer (A) / polymer (B)) of the polymer (A) and the polymer (B) is 8/92 to 50/50.

2. The polymer composition according to claim 1, wherein the 1,2-polybutadiene chain in the polymer (A) is a syndiotactic-1,2-polybutadiene chain.

3. The polymer composition according to claim 1 or 2, wherein the 1,2-polybutadiene chain in the polymer (A) has a 1,2-vinyl bond content of not lower than 70%.

4. The polymer composition according to any one of claims 1 to 3, wherein the polymer (B) has a weight-average molecular weight of 100,000 to 2,000,000, as measured by GPC according to the method as disclosed in the description.

5. The polymer composition according to any one of claims 1 to 4, wherein the aromatic vinyl compound in the structural unit derived from an aromatic vinyl compound in the polymer (B) contains styrene, and a content ratio of the structural unit derived from the aromatic vinyl compound is 5 to 45% by mass per 100% by mass of the polymer (B).

6. The polymer composition according to any one of claims 1 to 5, comprising at least one filling agent selected from the group consisting of silica and carbon black.

7. A tire comprising at least one component selected from the group consisting of a sidewall, a bead filler, a base tread and a tread each obtained from the polymer composition according to any one of claims 1 to 6.

## Patentansprüche

1. Polymerzusammensetzung, umfassend:

ein Polymer (A) mit einer 1,2-Polybutadienkette (vorausgesetzt, dass ein Polymer, das unter die Definition für das unten beschriebene Polymer (B) fällt, ausgeschlossen ist), und

ein Polymer (B) mit einer Struktureinheit, die von einer konjugierten Dienverbindung abgeleitet ist, und einer Struktureinheit, die von einer aromatischen Vinylverbindung abgeleitet ist, wobei die konjugierte Dienverbindung in der Struktureinheit, die von einer konjugierten Dienverbindung abgeleitet ist, Butadien enthält, und eine nachstehende mathematische Formel (i) erfüllt ist, wenn die Zusammensetzungsverhältnisse einer Struktureinheit, die durch die nachstehende chemische Formel (1) dargestellt ist, einer Struktureinheit, die durch die nachstehende chemische Formel (2) dargestellt ist, einer Struktureinheit, die durch eine nachstehende chemische Formel (3) dargestellt wird, und einer Struktureinheit, die durch eine nachstehende chemische Formel (4) dargestellt ist, p Mol-%, q Mol-%, r Mol-% bzw. s Mol-% sind, und wobei das Polymer (B) eine statistische Copolymereinheit aufweist, in der die Verteilung der von der konjugierten Dienverbindung abgeleiteten Struktureinheiten und der von der aromatischen Vinylverbindung abgeleiteten Struktureinheiten unregelmäßig ist:

[Chemische Formel 1]

Chemische Formel (1)

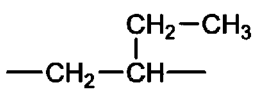

,

Chemische Formel (2)

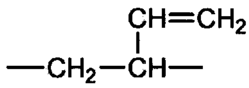

Chemische Formel (3)

$$—CH_2—CH_2—$$

,

Chemische Formel (4)

$$—CH_2—CH{=}CH—CH_2—$$

, und
[Mathematische Formel 1]

Mathematische Formel (i)

$$0,70 \le [(p + 0,5r)/(p + q + 0,5r + s)] \le 0,99,$$

und
wobei ein Massenverhältnis (Polymer (A) / Polymer (B)) des Polymers (A) und des Polymers (B) 8/92 bis 50/50 beträgt.

2. Polymerzusammensetzung nach Anspruch 1, wobei die 1,2-Polybutadienkette in dem Polymer (A) eine syndiotaktische 1,2-Polybutadienkette ist.

3. Polymerzusammensetzung nach Anspruch 1 oder 2, wobei die 1,2-Polybutadienkette in dem Polymer (A) einen 1,2-Vinylbindungsgehalt von nicht weniger als 70% aufweist.

4. Polymerzusammensetzung nach einem der Ansprüche 1 bis 3, wobei das Polymer (B) ein gewichtsgemitteltes Molekulargewicht von 100 000 bis 2 000 000 aufweist, gemessen durch GPC gemäß dem in der Beschreibung offenbarten Verfahren.

5. Polymerzusammensetzung nach einem der Ansprüche 1 bis 4, wobei die aromatische Vinylverbindung in der Struktureinheit, die von einer aromatischen Vinylverbindung abgeleitet ist, in dem Polymer (B) Styrol enthält und ein Gehaltsverhältnis der Struktureinheit, die von der aromatischen Vinylverbindung abgeleitet ist, 5 bis 45 Massen-% pro 100 Massen-% des Polymers (B) beträgt.

6. Polymerzusammensetzung nach einem der Ansprüche 1 bis 5, umfassend mindestens ein Füllmittel ausgewählt aus der Gruppe bestehend aus Siliciumdioxid und Carbon Black.

7. Reifen, umfassend mindestens eine Komponente ausgewählt aus der Gruppe bestehend aus einer Seitenwand, einem Wulstfüller, einer Basislauffläche und einer Lauffläche, die jeweils aus der Polymerzusammensetzung nach einem der Ansprüche 1 bis 6 erhalten wurden.

**Revendications**

1. Composition de polymère comprenant :

un polymère A) ayant une chaîne 1,2-polybutadiène (à condition qu'un polymère tombant dans une définition du polymère décrit ci-dessous (B) soit exclu), et
un polymère (B) ayant un motif structural issu d'un composé de type diène conjugué et un motif structural issu

d'un composé vinylaromatique, dans lequel le composé de type diène conjugué dans le motif structural issu d'un composé de type diène conjugué contient le butadiène, et une formule mathématique (i) ci-dessous est satisfaite lorsque des rapports de composition d'un motif structural représenté par une formule chimique (1) ci-dessous, d'un motif structural représenté par une formule chimique (2) ci-dessous, d'un motif structural représenté par une formule chimique (3) ci-dessous et d'un motif structural représenté par une formule chimique (4) ci-dessous, sont respectivement p % en moles, q % en moles, r % en moles et s % en moles, et dans laquelle le polymère (B) possède un groupement de copolymère aléatoire dans lequel la distribution des motifs structuraux du composé de type diène conjugué et des motifs structuraux issus du composé vinylaromatique est irrégulière :

[Formule chimique 1]

Formule chimique (1)

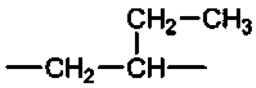

Formule chimique (2)

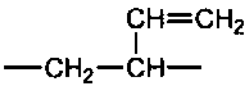

,

Formule chimique (3)

$$-CH_2-CH_2-$$

Formule chimique (4)

$$-CH_2-CH{=}CH-CH_2-$$

et

[Formule mathématique 1]

Formule mathématique (i)

$$0,70 \leq [(p + 0,5\ r)/(p + q + 0,5\ r + s)] \leq 0,99,$$

et

dans laquelle un rapport en masse (polymère (A) / polymère (B)) du polymère (A) et du polymère (B) est de 8/92 à 50/50.

2. Composition de polymère selon la revendication 1, dans laquelle la chaîne 1,2-polybutadiène dans le polymère (A) est une chaîne de 1,2-polybutadiène syndiotactique.

3. Composition de polymère selon la revendication 1 ou 2, dans laquelle la chaîne 1,2-polybutadiène dans le polymère (A) a une teneur en liaisons 1,2-vinyliques non inférieure à 70 %.

4. Composition de polymère selon l'une quelconque des revendications 1 à 3, dans laquelle le polymère (B) a un poids moléculaire moyen en poids de 100 000 à 2 000 000, tel que mesuré par GPC selon le procédé décrit dans la description.

5. Composition de polymère selon l'une quelconque des revendications 1 à 4, dans laquelle le composé vinylaromatique dans le motif structural issu d'un composé vinylaromatique dans le polymère (B) contient du styrène, et un rapport de teneur du motif structural issu du composé vinylaromatique est de 5 à 45 % en masse par 100 % en masse du polymère (B).

6. Composition de polymère selon l'une quelconque des revendications 1 à 5, comprenant au moins un agent de remplissage sélectionné dans le groupe constitué par la silice et le noir de carbone.

7. Pneu comprenant au moins un composant sélectionné dans le groupe constitué par une paroi latérale, une charge de talon, une bande de roulement de base et une bande de roulement chacune obtenue à partir de la composition de polymère selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014133097 A
- JP 2010070641 A
- JP 2016069628 A
- JP SHO634841 B
- JP HEI137970 B